Europäisches Patentamt

European Patent Office

Office européen des brevets

(11) Veröffentlichungsnummer: **0 417 422 A2**

## (12) EUROPÄISCHE PATENTANMELDUNG

(21) Anmeldenummer: 90113394.2

(22) Anmeldetag: 13.07.90

(51) Int. Cl.5: **B60Q 1/44**

(30) Priorität: 14.09.89 DE 3930775

(43) Veröffentlichungstag der Anmeldung:
20.03.91 Patentblatt 91/12

(84) Benannte Vertragsstaaten:
**DE FR GB IT SE**

(71) Anmelder: **FATEC FAHRZEUGTECHNIK GmbH**
**Borsigstrasse 2**
**W-8755 Alzenau(DE)**

(72) Erfinder: **Niederreiter, Friedrich**
**Kaiserstrasse 18**
**W-6360 Friedberg(DE)**

(74) Vertreter: **Klein, Thomas, Dipl.-Ing. (FH) et al**
**Sodener Strasse 9 Postfach 6140**
**W-6231 Schwalbach a. Ts.(DE)**

(54) **Verfahren und Anordnung zur Steuerung der Bremsleuchten eines Fahrzeugs.**

(57) Gegenstand der Erfindung sind ein Verfahren und eine Vorrichtung zur Steuerung und Überwachung der Bremsleuchten (11, 12) eines Fahrzeugs. Bei der Betätigung der Bremsanlage wird ein in einem Hauptbremszylinder angeordneter Bremslichtschalter (9) geschlossen. Das am Bremslichtschalter anstehende Signal wird einer Steuer- und Regeleinheit (i) im Fahrzeug zusätzlich zu mindestens einem von einem Radgeschwindigkeitssensor erzeugten Signal zugeführt. Bei Betätigung des Bremslichtschalters (9) und/ oder bei Bestimmung eines Bremsvorgangs aus dem Signal des Radgeschwindigkeitssensors wird ein Strom zur Bremslichterzeugung von der Steuer- und Regeleinheit (1) in die Bremsleuchten (11, 12) eingespeist. Die Funktionsfähigkeit der Bremsleuchten wird von der Steuer- und Regeleinheit (1) überwacht. Bei fehlender Funktionsfähigkeit oder bei einer Bremsung mit offenem Bremslichtschalter (9) oder mit nicht leuchtenden Bremsleuchten wird eine Fehlermeldung hervorgerufen.

## VERFAHREN UND ANORDNUNG ZUR STEUERUNG DER BREMSLEUCHTEN EINES FAHRZEUGS

Die Erfindung bezieht sich auf ein Verfahren und eine Anordnung zur Steuerung und Überwachung der Bremsleuchten eines Fahrzeugs, wobei ein in einem Hauptbremszylinder angeordneter Bremslichtschalter bei Betätigung der Bremsanlage geschlossen wird.

Die Bremsleuchten von Fahrzeugen sollen die Fahrer von nachfolgenden Kraftfahrzeugen auf die Geschwindigkeitsabnahme beim Bremsen aufmerksam machen, so daß durch rechtzeitiges Bremsen der nachfolgenden Fahrzeuge Kollisionen vermieden werden können. Bei Störungen der Bremsleuchten besteht eine große Gefahr für die nachfolgenden Fahrzeuge, insbesondere dann, wenn zwischen zwei Fahrzeugen bei höheren Geschwindigkeiten geringe Abstände vorhanden sind. Es ist deshalb wünschenswert, daß die Fahrzeuginsassen Ausfälle der Bremsleuchten bereits während der Fahrt feststellen können, um durch unverzügliche Behebung einer Störung oder ein Verhalten, das andere Verkehrsteilnehmer nicht oder nur wenig gefährdet, Kollisionen mit anderen Fahrzeugen möglichst zu vermeiden.

Der Erfindung liegt somit die Aufgabe zugrunde, ein Verfahren und eine Anordnung zur Steuerung der Bremsleuchten eines Fahrzeugs dahingehend weiter zu entwickeln, daß mit möglichst geringem Aufwand ein Ausfall der Anzeige durch die Bremsleuchten schnell festgestellt werden kann.

Die Aufgabe wird erfindungsgemäß für das Verfahren dadurch gelöst, daß einer Steuer- und Regeleinheit im Fahrzeug, der von mindestens einem Radgeschwindigkeitssensor ein Signal zur Auswertung zugeführt wird, das am Bremslichtschalter anstehende Signal zusätzlich zugeführt wird, daß bei Betätigung des Bremslichtschalters und/ oder bei Feststellung eines Bremsvorgangs aus dem Signal des Radgeschwindigkeitssensors ein Strom zur Bremslichterzeugung von der Steuer- und Regeleinheit in die Bremsleuchten eingespeist wird, daß die Funktionsfähigkeit der Bremsleuchten von der Steuer- und Regeleinheit überwacht wird und daß bei offenem Bremslichtschalter während des Bremsens und/ oder bei fehlender Funktionsfähigkeit der Bremsleuchten eine Fehlermeldung hervorgerufen wird. Zur Kontrolle der Bremslichtstromkreise und zur Betätigung der Bremslichter wird bei diesem Verfahren die Steuer- und Regeleinheit im Fahrzeug ausgenutzt. Es lassen sich im Fahrzeug bereits vorhandene Steuer- und Regeleinheiten zusätzlich für die Steuerung und Überwachung der Bremsleuchten heranziehen, wenn sie mindestens ein Radgeschwindigkeitssignal auswerten. Vorzugsweise ist die Steuer- und Regeleinheit Bestandteil eines Anti-Blockier-Systems. Anti-Blockier-Systeme sind bereits in zahlreichen Kraftfahrzeugen vorhanden und lassen sich für die Steuerung und Überwachung der Bremsleuchten zusätzlich zu ihrer Funktion als Antiblockiersystem ausnutzen. Es können aber auch Anti-Schlupf-Regler die Bremsleuchtensteuerung und -überwachung mitübernehmen. Weiterhin ist es möglich, Bordrechner, die zusätzlich an den Bremslichtschalter und die Bremsleuchten angeschlossen werden, auf die Steuerung und Überwachung der Bremsleuchten einzustellen.

Bremsanlagen mit Anti-Blockier-Regelungen sind bekannt und werden zahlreich in Fahrzeugen eingesetzt. Derartige Bremsanlagen enthalten z. B. einen Hauptbremszylinder mit einem pedalbetätigbaren Bremslichtschalter und eine elektronische Steuer-und Regeleinheit, der die Signale von Radgeschwindigkeitssensoren zugeführt werden und die elektrische Bremsdruck-Steuersignale für Schlupfregelorgane in Druckmittelleitungen der Radbremsen erzeugt. Die Bremsanlagen bestehen also aus einem hydraulischmechanischen System, der elektronischen Steuer- und Regeleinheit und aus elektromagnetisch gesteuert Bauteilen, die auf den Druck in den Radbremsen einwirken. Die Steuer- und Regeleinheit verarbeitet Signale der Radgeschwindigkeitssensoren um die Radgeschwindigkeiten festzustellen. Hieraus werden Zahlenwerte, die der Fahrzeuggeschwindigkeit und dem Bremsschlupf entsprechen, bestimmt. Aufgrund dieser Zahlenwerte nimmt die Steuer- und Regeleinheit eine geeignete Druckmodulation in den Radbremsen vor. Die Regel- und Steuereinheit ist redundant, z. B. aus mindestens zwei Prozessoren, aufgebaut. Die beiden, z. B. in der Programmstruktur gleichen Prozessoren erhalten die gleichen Eingangssignale und überwachen sich im übrigen auch gegenseitig. Jeder Prozessor kann bei einer Störung, z. B. einem Komponentenfehler im anderen Prozessor, die Schlupfregelung abschalten. Dann bleibt die normale Bremsfunktion erhalten. Eine Störung wird im Fahrzeug angezeigt. Die Steuer- und Regeleinheit führt gemäß der Erfindung zusätzlich zu der Bremsschlupfregelung die Überwachung der Bremslichtstromkreise und die Steuerung der Bremslichter durch. Aufgrund der hohen Arbeitsgeschwindigkeit der Steuer- und Regeleinheit kann diese Aufgabe zusätzlich übernommen werden. Infolge der ständigen Überwachung und der Zuordnung der Eingangssignale zu bestimmten Vorgängen werden Störungen in den Bremslichtstromkreisen bzw. Ausfälle der Bremsleuchten im Falle des Bremsens sofort erkannt und gemeldet. Daher können sofort die notwendigen Maßnahmen getroffen werden, um bei Ausfall der Bremsleuchten andere Verkehrsteilnehmer nicht zu gefährden. Beispielsweise können durchgebrannte Bremsleuchten sofort ersetzt werden.

Bei einer bevorzugten Ausführungsform werden die Bremsleuchten auch direkt über den Bremslichtschalter beim Bremsen mit Strom für die Anzeige des Bremsvorgangs versorgt. Hierdurch wird sichergestellt, daß ein völliger Ausfall der Steuer- und Regeleinheit die Versorgung der Bremsleuchten mit Strom nicht unterbindet. Die Sicherheit der optischen Anzeige eines Bremsvorgangs wird hierdurch wesentlich erhöht.

Es ist günstig, wenn bei einer Schlupfregelung der Räder des Fahrzeugs der über die Bremsleuchten fließende Strom durch eine Erhöhung und/ oder durch periodische Verminderung oder Unterbrechung gegenüber dem bei einer Bremsung ohne Schlupfregelung fließenden Strom verändert wird. Dies hat zur Folge, daß sich die optischen Anzeigen bei einer Bremsung mit und ohne Schlupfregelung unterscheiden. Aufgrund dieses Unterschieds können die Fahrer nachfolgender Fahrzeuge ihr Fahrverhalten auf den ABS-Bremsvorgang des vorausfahrenden Fahrzeuges abstimmen.

Bei einer anderen vorteilhaften Ausführungsform wird die Bremsverzögerung auf eine Schwelle hin überwacht, die über den bei der Schlupfregelung auftretenden maximalen Verzögerungswerten liegt, wobei nach dem Überschreiten dieser Schwelle die Bremsleuchten von der Steuer- und Regeleinheit ständig mit Strom versorgt werden. Über den Verzögerungswerten der Schlupfregelung liegende Verzögerungswerte entstehen .im allgemeinen bei Auffahrunfällen. In einem solchen Fall werden mit den vorstehend beschriebenen Maßnahmen die Bremslichter auch bei still stehendem Fahrzeug, also auch noch nach dem Auffahrunfall, mit Strom versorgt. Wenn die Bremsleuchten, die Steuer- und Regeleinheit und die Batterie den Unfall funktionsfähig überstanden haben, bleiben die Bremsleuchten in Betrieb, so daß andere Fahrzeugführer schneller gewarnt werden. Insbesondere werden die Bremsleuchten nach einem Auffahrunfall mit einem pulsierenden Strom versorgt, um eine pulsierende Anzeige wie im Betrieb der Warnblinkanlage zu erzeugen.

Vorzugsweise wird die Steuer- und Regeleinheit bei eingeschalteter Zündspannung mit Strom versorgt. Die Steuer- und Regeleinheit überwacht daher im Betrieb des Fahrzeugs immer den Bremslichtschalter und die Bremsleuchten. Auch nach einem Unfall bleibt das Anti-Blockier-System in Betrieb und versorgt bei intaktem Zustand die Bremslichter mit Strom.

Eine Anordnung zur Durchführung des oben beschriebenen Verfahrens besteht erfindungsgemäß darin, daß ein Arbeitskontakt eines Bremslichtschalters zwischen einem Pol der Batterie und einem Eingang einer Steuer- und Regeleinheit angeordnet ist, daß die Bremsleuchte parallel zwischen einem Ausgang der Steuer- und Regeleinheit und dem anderen Pol der Batterie angeordnet sind und daß mindestens ein das Ansprechen der Bremsleuchten erfassender Fühler mit einem weiteren Eingang der Steuer- und Regeleinheit verbunden ist. Für die Überwachung und Betätigung der Bremsleuchten wird bei dieser Anordnung eine bereits vorhandene Steuer- und Regeleinheit ausgenutzt, die zusätzlich zu einer eventuell erforderlichen Schlupfregelung aufgrund seiner hohen Arbeitsgeschwindigkeit die Steuer- und Überwachungsfunktion der Bremsleuchten übernehmen kann. Die Steuer- und Regeleinheit arbeitet im übrigen unabhängig von der Überwachung des Bremslichtschalters und der Bremsleuchten, sowie von der Ansteuerung der Bremsleuchten. Vorzugsweise ist parallel zu der Steuer- und Regeleinheit zwischen dem Bremslichtschalter und den Bremsleuchten ein Stromweg angeordnet. Durch diese Anordnung wird ein Parallelzweig für die Bremslichter geschaffen, die daher auch bei Ausfall der Steuer- und Regeleinheit mit Strom versorgt werden, wenn der Bremslichtschalter betätigt wird. Die Steuer- und Regeleinheit wird insbesondere durch die Elektronik eines Anti-Blockier-Systems, einer Anti-Schlupf-Regelanordnung oder eines Bordrechners realisiert.

Die Erfindung wird im folgenden anhand eines. in einer Zeichnung dargestellten Ausführungsbeispiels näher beschrieben, aus dem sich weitere Einzelheiten, Merkmale und Vorteile ergeben.

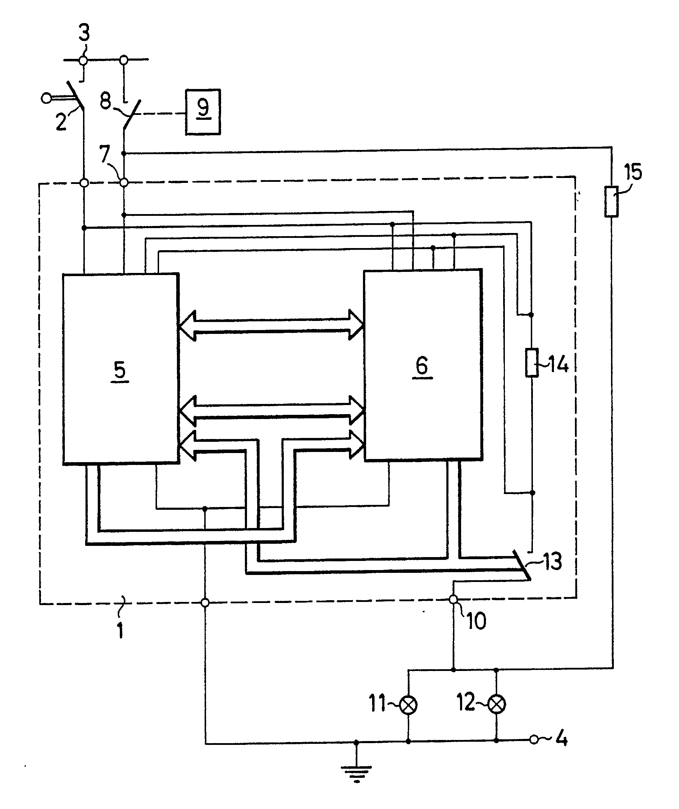

In der Zeichnung ist eine Steuer- und Regeleinheit eines Anti-Blockier-Systems in Verbindung mit einem Bremslichtschalter und mit Bremsleuchten im Blockschaltbild dargestellt. Die Steuer- und Regeleinheit (1) kann zu einem Anti-Blockier-System gehören. Die Steuer- und Regeleinheit (1) ist mit ihrem Betriebsspannungsanschluß über einen bei eingeschalteter Zündung eines Kraftfahrzeugs geschlossenen Schalter (2) an einen Pol (3) einer Batterie im Kraftfahrzeug angeschlossen. Der andere Betriebsspannungsanschluß der Steuer- und Regeleinheit (1) ist mit dem zweiten Pol (4) der Batterie verbunden, der an Masse gelegt ist. Die Steuer- und Regeleinheit (1) enthält zwei Prozessoren (5, 6) für die Funktionsüberwachung des Anti-Blockier-Systems. Hierdurch wird eine Redundanz erzielt. Die Steuerung und Überwachung der Bremsleuchten kann auch mit einem Anti-Blockiersystem durchgeführt werden, das nur einen Prozessor enthält. Die beiden Prozessoren (5,6) erhalten die gleichen Eingangssignale und sind in ihrer Programmstruktur gleich. Die Signalströme der Prozessoren (5, 6) werden mehrfach über nicht näher bezeichnete Kanäle miteinander verglichen. Ein Signalweg ist für die Synchronisierung der Prozessoren (5, 6) bestimmt und ermöglicht eine gegenseitige Überwachung der Taktfrequenzen. Jeder Prozessor kann über einen Ausgang unabhängig vom anderen das Anti-Blockier- System abschalten oder vorübergehend stillsetzen. Fehler, z. B. Komponentenfehler in den Prozessoren (5, 6), werden durch die redundante Informationsverarbeitung in beiden Prozessoren erkannt, was zu einer Abschaltung des Anti-Blockier-Systems und zur Erzeugung einer Fehlermeldung führt.

Zwischen dem Pol (3) und einem Eingang (7) der Steuer- und Regeleinheit (i) ist ein Arbeitskontakt (8) eines Bremslichtschalters (9) der sich im Hauptbremszylinder befindet, angeordnet. Der Eingang (7) ist mit beiden Prozessoren (5, 6) verbunden. An einem Anschluß (10) der Steuer- und Regeleinheit (i) sind parallel zwei Bremsleuchten (11, 12) angeschlossen, die mit ihren zweiten Anschlüssen an Masse gelegt sind. Dem Anschluß (10) ist ein kontaktloses, von den Prozessoren (5, 6) gesteuertes Schaltelement (13) vorgeschaltet, das über einen Stromfühler (14), einen Widerstand, an den Schalter (2) angeschlossen ist. Vom Eingang (7) zweigt ein Strompfad mit einem Widerstand (15) ab, der in der Größe dem Widerstand des Stromfühlers (14) entspricht. Der Stromfühler ist je mit einem Eingang der Prozessoren (5, 6) verbunden. Der Strompfad mit dem Widerstand (15) ist an die Bremsleuchten (11, 12) angeschlossen.

Die Steuer- und Regeleinheit (1) wird beim Schließen des Schalters (2) mit Betriebsspannung versorgt und beginnt zu arbeiten. Das Signal am Eingang (7) wird von der Steuer- und Regeleinheit dahingehend überprüft, ob der Arbeitskontakt (8) geschlossen ist oder nicht. Ein geschlossener Arbeitskontakt (8) und damit ein betätigter Bremslichtschalter (9) verursachen am Eingang (7) einen hohen Signalpegel. Liegt ein hoher Signalpegel am Eingang (7) vor, dann schließt die Steuer- und Regeleinheit (1) das Schaltelement (13), wodurch die Bremsleuchten (11, 12) mit Strom versorgt werden und leuchten. Zugleich prüft die Steuer- und Regeleinheit (i), ob bei einem hohen Pegel am Eingang (7) am Stromfühler (14) ein hoher Pegel vorhanden ist, der auf einen Stromfluß hinweist, d. h. die Stromversorgung der Bremsleuchten (i1, 12) und damit deren einwandfreies Arbeiten wird über die Feststellung eines Stromflusses im Stromfühler (14) erkannt. Es kann auch die Höhe des Stromflusses über den Spannungsabfall am Stromfühler als Kennzeichen eines ungestörten Betriebs beider oder nur eines Bremslichts ausgewertet werden. Der Widerstand des Stromfühlers (14) und der Widerstand (15) sind so aufeinander abgestimmt, daß nach dem Schließen des Arbeitskontakts (8) ein Teil des Stroms der Bremsleuchten (11, 12) über den Stromfühler (14) und ein Teil über den Widerstand (15) fließt. Bei einem Ausfall der Steuer- und Regeleinheit (1) werden die Bremsleuchten (11, 12) über den parallelen Strompfad mit dem Widerstand (15) mit Strom versorgt.

Falls ein Ausfall der Bremsleuchte (11, 12) bei Betätigung des Bremslichtschalters (9) von der Steuer- und Regeleinheit festgestellt wird, erzeugt die Steuer- und Regeleinheit (1) eine Fehlermeldung. Die defekte Bremsleuchte kann dann unverzüglich ausgewechselt werden. Zusätzlich überwacht die Steuer- und Regeleinheit (1) einen Bremsvorgang durch eine Plausibilitätsbetrachtung unter Verwendung der Radgeschwindigkeiten, die in der Steuer-und Regeleinheit (1) verfügbar sind. Aus den Änderungen der Radgeschwindigkeiten wird im Vergleich mit vorgegebenen Verzögerungswerten, die Bremsvorgängen entsprechen, das Vorliegen einer Fahrzeugbremsung von der Steuer- und Regeleinheit (1) festgestellt. Hierauf wird das Schaltelement (13) unabhängig davon, ob der Bremslichtschalter (9) geschlossen ist oder nicht, geschlossen, was die Bremsleuchten (11, 12) zum Leuchten bringt. Insbesondere das Vorliegen einer Schlupfregelung, die von der Steuer- und Regeleinheit (1) durchgeführt wird, bewirkt das Schließen des Schaltelements (13). Falls die Steuer- und Regeleinheit (1) einen Bremsvorgang feststellt, ohne daß der Bremslichtschalter (9) betätigt ist, wird ebenfalls eine Fehlermeldung hervorgerufen.

Mit der Steuer- und Regeleinheit (1) wird der Unterschied zwischen einem Bremsvorgang mit und ohne Schlupfregelung festgestellt. Auf die beiden unterschiedlichen Bremsvorgänge reagiert die Steuer-und Regeleinheit durch unterschiedliche Ansteuerung der Bremsleuchten (11, 12). Die Steuer- und Regeleinheit (1) öffnet und schließt das Schaltelement (13) z. B. bei einer Schlupfregelung periodisch, so daß die Bremsleuchten periodisch veränderliche Helligkeitsschwankungen zeigen. Diese Helligkeitsschwankungen machen andere Verkehrsteilnehmer darauf aufmerksam, daß eine starke Bremsung stattfindet. Es ist auch möglich, z. B. über das Einspeisen eines höheren Stroms durch Umschalten auf eine höhere Spannungsquelle, die Helligkeit der Bremsleuchten (11, 12) bei einer Schlupfregelung zu steigern.

Die Steuer- und Regeleinheit (1) vergleicht auch die berechneten Bremsverzögerungen mit einem vorgegebenen Wert, der über den bei Schlupfregelungen möglichen Bremsverzögerungen liegt. Beispielsweise ist dieser Vergleichswert größer als die bei trockener Fahrbahn und hohem Reifendruck vielen auftretenden Verzögerungen. Der Vergleichswert kann z. B. um den Faktor 2 höher sein als diese maximale Bremsverzögerung. Das Auftreten einer so hohen Bremsverzögerung ist das Anzeichen eines Unfalls. Die Steuer- und Regeleinheit (1) reagiert auf das Auftreten einer derartigen Bremsverzögerung dadurch, daß sie auch noch im Stillstand des Fahrzeugs die Bremsleuchten (11, 12) mit Strom versorgt. Wenn nach dem Unfall ein einwandfreier Betrieb der Steuer- und Regeleinheit und der Bremsleuchten (11, 12) möglich ist, leuchten die Bremsleuchten (11, 12) um andere Verkehrsteilnehmer zu warnen.

Das Ansprechen der Bremslichter kann der Steuer-und Regeleinheit auch photoelektrisch gemeldet werden, indem je ein photoelektrischer Empfänger, z. B. ein Phototransistor, an einer Bremsleuchte angeordnet und mit mindestens einem Eingang der Steuer- und Regeleinheit verbunden ist.

Es ist auch möglich, Enden von Lichtleitfasern an den Bremsleuchten (11, 12) vorzusehen. Die anderen Enden der Lichtleitfasern sind an photoelektrischen Empfängern angeordnet, die mit Eingängen der Steuer-und Regeleinheit verbunden sind.

Das oben beschriebene Anti-Blockier-System (1) ist nur als Beispiel für eine elektronische Steuerung angegeben, die mindestens ein Radgeschwindigkeitssignal eines Radgeschwindigkeitssensors auswertet. Die Auswertung bezieht sich darauf, ob ein Bremsvorgang stattfindet oder nicht. Besitzt eine derartige Anordnung die Fähigkeit Bremsvorgänge zu erkennen, dann kann sie durch die Zufuhr eines von der Stellung des Bremslichtschalters abhängigen Signals und durch eine Einwirkungsmöglichkeit auf die Bremsleuchten so umgerüstet bzw. eingestellt werden, daß sie die oben beschriebenen Steuer- und Überwachungsfunktionen für die Bremsleuchten zusätzlich ausführt. Elektronische Schaltungen, die für die Steuerung und Überwachung von Bremsleuchten eingesetzt werden können, sind insbesondere Anti-Schlupf-Regler und Bordrechner.

Die Bremsleuchten (11, 12) können auch vorsorglich überwacht werden, wenn keine Bremsung des Fahrzeuges stattfindet. Hierzu wird ein so kleiner Strom in die Bremsleuchten (11, 12) eingespeist, daß kein Aufleuchten stattfindet, aber am Stromfühler (14) ein Stromfluß deutlich erkannt wird. Wird kein Stromfluß festgestellt, dann ist dies ein Kriterium, daß die Bremsleuchte nicht funktionsfähig ist. Dies kann verschiedene Ursachen haben. Beispielsweise kann die jeweilige Birne defekt sein. Es ist auch eine Leitungsunterbrechung oder eine Oxidation von Kontakten möglich. Eine nicht funktionsfähige Bremsleuchte bewirkt eine sofortige Meldung, so daß der Fehler unverzüglich festgestellt und gegebenenfalls sofort behoben werden kann.

Es wird also die Funktionsfähigkeit der Bremsleuchten entweder im Falle des Bremsens oder bereits dann überwacht, wenn keine Bremsung vorliegt. Beim Bremsen kann die Funktionsfähigkeit der Bremsleuchten, insbesondere durch Erfassung des Leuchtenstroms oder durch Lichtleitfasern mit optoelektronischen Elementen erfaßt werden, die das ausgesendete Licht erfassen.

## BEZUGSZEICHENLISTE

1 = Steuer- und Regeleinheit
2 = Schalter
3 = Pol
4 = Pol
5 = Prozessor
6 = Prozessor
7 = Eingang
8 = Arbeitskontakt
9 = Bremslichtschalter
10 = Anschluß
11 = Bremsleuchte
12 = Bremsleuchte
13 = Schaltelement
14 = Stromfühler
15 = Widerstand

## Ansprüche

1. Verfahren zur Steuerung und Überwachung der Bremsleuchten eines Fahrzeugs, wobei ein in ei- nem Hauptbremszylinder angeordneter Bremslicht- schalter bei Betätigung der Bremsanlage geschlossen wird, dadurch gekennzeichnet, daß einer Steuer- und Regeleinheit (1) im Fahrzeug, der von mindestens einem Radgeschwindigkeitssensor ein Signal zur Auswertung zugeführt wird, das am Bremslichtschalter (9) anstehende Signal zusätzlich zugeführt wird, daß bei Feststellung des Bremslichtschalters (9) und/ oder bei Bestimmung eines Bremsvorganges aus dem Signal des Radge- schwindigkeitssensors ein Strom zur Bremslichter- zeugung von der Steuer- und Regeleinheit (1) in die Bremsleuchten (11, 12) eingespeist wird, daß die Funktionsfähigkeit der Bremsleuchten (11, 12) von der Steuer- und Regeleinheit (1) überwacht wird und daß bei offenem Bremslichtschalter (9) während des Bremsens und/ oder fehlender Funk- tionsfähigkeit der Bremsleuchten eine Fehlermel- dung hervorgerufen wird.
2. Verfahren nach Anspruch 1, dadurch gekennzeichnet daß die Funktionsfähigkeit der Bremsleuchten (11, 12) beim Ansprechen der Bremsleuchten mittels des Stromflusses oder des ausgesendeten Lichts festgestellt wird.
3. Verfahren nach Anspruch 1, dadurch gekennzeichnet, daß die Funktionsfähigkeit der Bremsleuchten (11, 12) außerhalb eines Bremsvorgangs durch Überwachung eines über die Bremsleuchten (11, 12) fließenden Stroms festgestellt wird, der wegen seiner geringen Stromstärke die Bremsleuchten nicht zum Aussenden von Licht anregt.

4. Verfahren nach einem oder mehreren der vorhergehenden Ansprüche, dadurch gekennzeichnet, daß die Bremsleuchten (11, 12) auch direkt über den Bremslichtschalter (9) beim Bremse mit Strom für die Anzeige des Bremsvorgangs versorgt werden.

5. Verfahren nach einem oder mehreren der vorhergehenden Ansprüche, dadurch gekennzeichnet, daß bei einer Schlupfregelung der Räder des Fahrzeugs der über die Bremsleuchten (11, 12) fließende Strom durch eine Erhöhung und/ oder durch periodische Verminderung der Unterbrechung gegenüber dem bei einer Bremsung ohne Schlupfregelung fließenden Strom verändert wird.

6. Verfahren nach einem oder mehreren der vorhergehenden Ansprüche, dadurch gekennzeichnet, daß die Bremsverzögerung auf eine Schwelle hin überwacht wird, die über den bei der Schlupfregelung auftretenden maximalen Verzögerungswerten liegt und daß nach dem Überschreiten dieser Schwelle die Bremsleuchten (11, 12) von der Steuer- und Regeleinheit (1) ständig oder pulsierend mit Strom versorgt werden.

7. Verfahren nach einem oder mehreren der vorhergehenden Ansprüche, dadurch gekennzeichnet, daß die Steuer- und Regeleinheit (1) bei eingeschalteter Zündspannung mit Strom versorgt wird.

8. Anordnung zur Durchführung des Verfahrens nach einem oder mehreren der vorhergehenden Ansprüche, dadurch gekennzeichnet, daß ein Arbeitskontakt (8) eines Bremslichtschalters (9) zwischen einem Pol (3) der Batterie und einem Eingang (7) einer Steuer- und Regeleinheit (1) angeordnet ist, daß die Bremsleuchten (11, 12) parallel zwischen einem Anschluß (10) der Steuer- und Regeleinheit (1) und dem anderen Pol (4) der Batterie angeordnet sind und daß mindestens ein das Ansprechen der Bremsleuchten (11, 12) erfassender Fühler mit einem weiteren Eingang der Steuer- und Regeleinheit (1) verbunden ist.

9. Anordnung nach Anspruch 8, dadurch gekennzeichnet daß der Fühler ein Stromfühler (14) ist.

10. Anordnung nach Anspruch 8, dadurch gekennzeichnet, daß zwei photoelektrische Empfänger je für eine Bremsleuchte (11 12) je mit einem Eingang der Steuer- und Regeleinheit (1) verbunden sind.

11. Anordnung nach Anspruch 8, dadurch gekennzeichnet, daß je ein Lichtleiter an einem Ende einer Bremsleuchte (11, 12) und am anderen Ende an einen mit einem Eingang an die Steuer- und Regeleinheit (1) angeschlossenen Empfänger angeordnet ist.

12. Anordnung nach einem oder mehreren der vorhergehenden Ansprüche, dadurch gekennzeichnet, daß parallel zu der Steuer- und Regeleinheit (1) zwischen dem Bremslichtschalter (9) und den Bremsleuchten (11, 12) ein Stromweg angeordnet ist.

13. Anordnung nach einem oder mehreren der vorhergehenden Ansprüche, dadurch gekennzeichnet, daß die Steuer- und Regeleinheit (1) Bestandteil eines Anti-Blockier-Systems ist.

14. Anordnung nach einem oder mehreren der Ansprüche 8 bis 12, dadurch gekennzeichnet, daß die Steuer-und Regeleinheit (1) Bestandteil eines Anti-Schlupfreglers ist.

15. Anordnung nach einem oder mehreren der Ansprüche 8 bis 12, dadurch gekennzeichnet, daß die Steuer-und Regeleinheit (i) durch einen Bordrechner gebildet wird.